# EUROPEAN PATENT SPECIFICATION

(11) **EP 4 019 940 B1**
(45) Date of publication and mention of the grant of the patent: **17.04.2024**
(21) Application number: 21209893.3
(22) Date of filing: 23.11.2021
(51) Int. Cl.: G01N 21/15, G01N 21/89, B65H 63/06

(54) **YARN MONITORING DEVICE AND YARN WINDING MACHINE**
GARNÜBERWACHUNGSVORRICHTUNG UND GARNWICKELMASCHINE
DISPOSITIF DE SURVEILLANCE DE FIL ET MACHINE DE BOBINAGE DE FIL

(30) Priority: 22.12.2020 JP 2020212565
(43) Date of publication of application: 29.06.2022
(73) Proprietor: Murata Machinery, Ltd., Kyoto-shi, Kyoto 601-8326 (JP)
(72) Inventor: Okazaki, Yohei, Kyoto-shi, Kyoto, 612-8686 (JP); Nishio, Yusuke, Kyoto-shi, Kyoto, 612-8686 (JP)
(74) Representative: Hoffmann Eitle

(56) References cited:
- EP-A1- 1 643 246
- EP-A1- 1 983 334
- WO-A1-2008/154756
- DE-A1- 19 909 703

## Description

### BACKGROUND OF THE INVENTION

### 1. Field of the Invention

The present invention mainly relates to a yarn monitoring device capable of monitoring a yarn running in a running space.

### 2. Description of the Related Art

A yarn clearer (yarn monitoring device) arranged in a spinning machine that monitors yarn quality of a spun yarn is disclosed in Japanese Patent Application Laid-Open No. 2013-160678. The yarn clearer includes a light emitting element and a light receiving element. The light emitting element irradiates light on the spun yarn running on a yarn passage. The light receiving element receives the light that has passed through the spun yarn, and converts the same into an electric signal. A transparent protective member (transmissive part) is provided each between the light emitting element and the yarn passage, and between the light receiving element and the yarn passage such that dirt can be prevented from adhering to the protective member.

DE 199 09 703 A1 discloses a device for optically monitoring a yarn according to the preamble of claim 1.

WO 2008/154756 A1 relates to a device for the testing of a moving textile material. An optical component surface which faces the textile material has a structure with raised areas and/or recesses which counteracts the contamination of the surface. The raised areas can, for example, catch particles of contamination flying toward the surface and as such prevent the contamination of other zones lying in the slipstream thereof.

### Problem to be solved by the Invention

In some cases, the yarn becomes electrostatically charged because of getting rubbed and the like while running. When such an electrostatically charged yarn runs near the transmissive part, the transmissive part, too, becomes electrostatically charged. When the transmissive part becomes electrostatically charged, dirt such as surrounding fiber waste and dust adheres to the transmissive part. As a result, the light gets interrupted because of the adhered dirt, and the yarn quality cannot be appropriately monitored by the yarn monitoring device. In Japanese Patent Application Laid-Open No. 2013-160678, the purpose of providing the protective member is to prevent the dust from getting adhered; however, adhering of dirt thereon caused by the electrostatic charging thereof and, means to remove such dirt are not specifically explained in Japanese Patent Application Laid-Open No. 2013-160678.

### SUMMARY OF THE INVENTION

The present invention has been made in view of the above circumstances. It is an object of the present invention to provide a yarn monitoring device in which dirt is less likely to be adhered to a transmissive part.

According to the present invention, a yarn monitoring device includes the features of claim 1.

According to another aspect of the present invention, a yarn winding machine includes the yarn monitoring device; a drafting device; a spinning device; a winding section; and a discharging member. The drafting device drafts a fiber bundle. The spinning device twists the fiber bundle to produce a yarn. The winding section winds the yarn produced by the spinning device. The discharging member discharges an electrostatic charge on the yarn by contacting the yarn. The drafting device, the spinning device, the discharging member, the yarn monitoring device, and the winding section are arranged sequentially from upstream in a running direction of the fiber bundle or the yarn.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a front view of an overall configuration of a spinning machine according to an embodiment of the present invention.
FIG. 2 is a side view of the spinning unit.
FIG. 3 is a front view of a yarn monitoring device.
FIG. 4 is a cross-sectional view of a holder when cut in a plane parallel to a yarn running direction.
FIG. 5 is a cross-sectional view of the holder when cut in a plane horizontal to the yarn running direction.
FIG. 6 is a table showing an effect of surface resistivity on antistatic effect and scratch resistance.
FIG. 7 is a table showing an effect on transparency of a difference between refractive indices of a transparent resin and an antistatic agent.
FIG. 8 is a cross-sectional view showing a configuration of a transmissive part according to a first modification.
FIG. 9 is a side view of a spinning unit according to a second modification.

### DETAILED DESCRIPTION

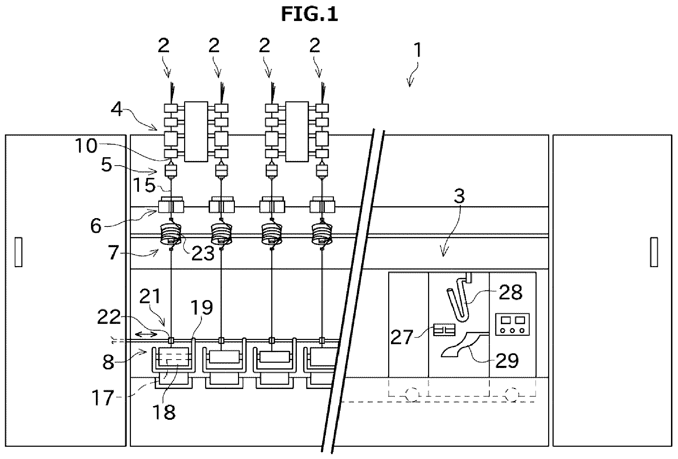

Exemplary embodiments of the present invention are explained below with reference to the accompanying drawings. A spinning machine 1 shown in FIG. 1 includes a plurality of spinning units 2 arranged side-by-side and a yarn joining carrier 3.

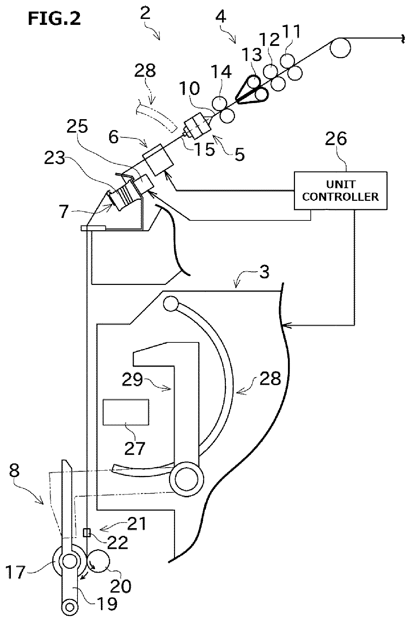

As shown in FIG. 2, each spinning unit 2 includes, sequentially from upstream to downstream, a drafting device 4, a spinning device 5, a yarn monitoring device 6, a yarn accumulating device 7, and a winding section 8. In the present invention, terms "upstream" and "downstream" refer to upstream and downstream in a running direction of a fiber bundle and a spun yarn at the time of yarn spinning.

The drafting device 4 drafts a fiber bundle 10. The drafting device 4 includes a plurality of draft rollers 11, 12, 13, and 14, and opposing rollers that are arranged facing the draft rollers. Each of the draft rollers 11, 12, 13, and 14 is rotationally driven at a predetermined rotational speed. The drafting device 4 stretches (drafts) the fiber bundle 10 by pinching and transporting the fiber bundle 10 between the rotating draft rollers 11, 12, 13, and 14 and the opposing rollers. The fiber bundle 10 drafted by the drafting device 4 is supplied to the spinning device 5.

The spinning device 5 twists the fiber bundle 10 to generate a spun yarn 15. The configuration of the spinning device 5 is not particularly limited to any specific configuration; however, it is assumed that the spinning device 5 according to the present embodiment is an air-type spinning device. A swirling air current is generated inside the air-type spinning device 5 and the fiber bundle 10 is twisted by the action of the swirling air current.

The spun yarn 15 produced by the spinning device 5 passes through the yarn monitoring device 6. The yarn monitoring device 6 monitors the state of the running spun yarn 15, and detects a portion of the spun yarn 15 having a problematic quality (yarn defect). Detailed configuration of the yarn monitoring device 6 will be explained later.

The spun yarn 15 coming out of the yarn monitoring device 6 is wound onto a bobbin 17 by the winding section 8. The winding section 8 includes a cradle arm 19, a winding drum 20, and a traversing device 21.

The cradle arm 19 rotatably supports the bobbin 17 onto which the spun yarn 15 is wound. The winding drum 20 contacts an outer peripheral surface of the bobbin 17. When the winding drum 20 is rotationally driven, the bobbin 17 is also rotationally driven. The traversing device 21 includes a traverse guide 22 that engages with the spun yarn 15. The traversing device 21 is moved horizontally (in an axial direction of the bobbin 17). The spun yarn 15 is traversed by the traversing device 21 while the spun yarn 15 is wound onto the bobbin 17.

With the spinning unit 2 configured as explained above, the spun yarn 15 can be produced from the fiber bundle 10 and wound onto the bobbin 17.

In the spinning machine 1 according to the present embodiment, the yarn accumulating device 7 is arranged between the yarn monitoring device 6 and the winding section 8. As shown in FIG. 2, the yarn accumulating device 7 includes a yarn accumulating roller 23 and an electric motor 25 that rotationally drives the yarn accumulating roller 23.

The yarn accumulating roller 23 is for temporarily accumulating a certain amount of the spun yarn 15 around an outer peripheral surface thereof. Because the spun yarn 15 is temporarily accumulated in this manner, the yarn accumulating device 7 functions as a type of a buffer. Accordingly, a defect that arises when a spinning speed in the spinning device 5 and a winding speed in the winding section 8 do not match for some reason (for example, slack in the spun yarn 15) can be resolved.

Each spinning unit 2 includes a unit controller 26. The unit controller 26 appropriately controls various parts/devices/sections of the spinning unit 2.

As shown in FIGS. 1 and 2, the yarn joining carrier 3 includes a yarn joining device 27 and a sucking device (including a suction pipe 28 and a suction mouth 29).

The yarn joining device 27 is a device that joins yarn ends to each other. A configuration of the yarn joining device 27 is not particularly limited. For example, an air-type splicer in which the yarn ends are intertwined by the action of a swirling air current can be employed as the yarn joining device 27. The suction pipe 28 sucks and catches a yarn end discharged from the spinning device 5 and guides the yarn end to the yarn joining device 27. The suction mouth 29 sucks and catches a yarn end from a package 18 that is supported in the winding section 8 and guides the yarn end to the yarn joining device 27.

Next, an operation performed when a yarn defect is detected by the yarn monitoring device 6 will explained briefly.

When a yarn defect (problematic yarn portion in the spun yarn 15) is detected, the yarn monitoring device 6 transmits a yarn defect detection signal to the unit controller 26. Upon receiving the yarn defect detection signal, the unit controller 26 cuts the spun yarn 15. The spun yarn 15 can be cut by stopping the operation of the spinning device 5, or by operating a not-shown cutter. The spun yarn 15 that is on the downstream side of the cut problematic yarn portion is temporarily wound onto the package 18. The spun yarn 15 wound onto the package 18 thus includes a yarn portion that includes the yarn defect detected by the yarn monitoring device 6. Also, the unit controller 26 stops the winding operation of the winding section 8. Subsequently, the unit controller 26 transmits a control signal to the yarn joining carrier 3, and causes the yarn joining carrier 3 to travel up to a working position in front of the spinning unit 2 in which a yarn defect has been detected.

When the yarn joining carrier 3 stops at the working position in front of the spinning unit 2, a yarn end discharged from the spinning device 5 is sucked and caught by the suction pipe 28 and is then guided to the yarn joining device 27. Moreover, around the time of such an operation, in the yarn joining carrier 3, a yarn end wound around the package 18 is sucked and caught by the suction mouth 29, and is then guided to the yarn joining device 27. The yarn portion including the yarn defect that was wound around the package 18 is sucked and pulled by the suction mouth 29. As a result, the yarn portion including the yarn defect detected by the yarn monitoring device 6 is removed from the package 18.

The yarn ends guided by the suction pipe 28 and the suction mouth 29 are joined together in the yarn joining device 27. As a result, the cut spun yarn 15 again becomes continuous between the spinning device 5 and the winding section 8.

Once the yarn joining operation is completed in the yarn joining device 27, the unit controller 26 causes the winding section 8 to resume the winding in the spun yarn 15. By performing the series of operation explained above, the yarn defect detected by the yarn monitoring device 6 can be eliminated, and winding of the spun yarn 15 onto the package 18 can be resumed.

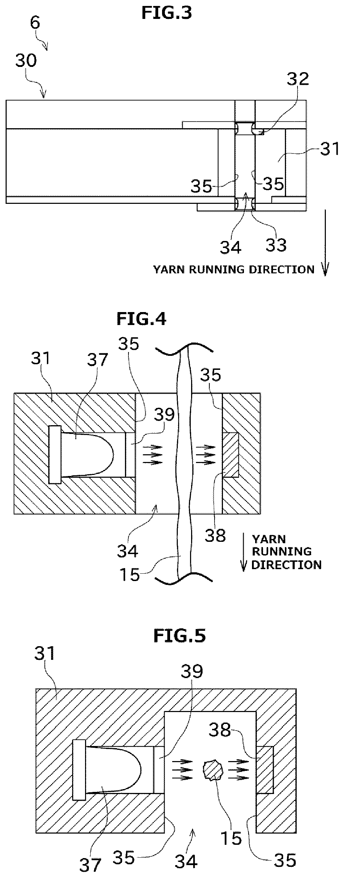

Configuration of the yarn monitoring device 6 will be explained in detail with reference to FIGS. 3 to 5.

As shown in FIG. 3, the yarn monitoring device 6 according to the present embodiment mainly includes a housing 30, a holder 31, an upstream yarn path guide 32, and a downstream yarn path guide 33.

The housing 30 constitutes a part of an exterior of the yarn monitoring device 6. The holder 31, the upstream yarn path guide 32, and the downstream yarn path guide 33 are arranged inside the housing 30.

In the present embodiment, the holder 31 is provided inside the housing 30. Alternatively, the housing 30 and the holder 31 can be formed integrally. As shown in FIGS. 4 and 5, a running space 34 is formed inside the holder 31. The running space 34 is a space through which the spun yarn 15 runs, and is a space through which the spun yarn 15 that goes out of the yarn monitoring device 6 passes. As shown in FIG. 5, the running space 34 has a substantially U-shaped inner wall surface when the holder 31 is cut in a plane orthogonal to the yarn path. In other words, when viewed in a direction parallel to the yarn path, the running space 34 is formed such that one end of the running space 34 is open and the other end thereof is closed.

The holder 31 has a pair of side wall surfaces 35 that are parallel to each other. The side wall surfaces 35 are also parallel to the yarn path. A space between the pair of the side wall surfaces 35 is equivalent to the running space 34.

A light emitting element 37 and a light receiving element 38 are provided in the holder 31. The light emitting element 37 is, for example, a light-emitting diode (LED) that irradiates light toward the running space 34. The light receiving element 38 is, for example, a photodiode that converts an intensity of the received light into an electric signal and outputs the same. The light emitting element 37 and the light receiving element 38 are arranged facing each other with the running space 34 interposed therebetween.

A plate-shaped transmissive part 39 is arranged between the light emitting element 37 and the running space 34. Specifically, a space for housing the light emitting element 37 is formed in the holder 31, and the transmissive part 39 is arranged so as to close off this space. Accordingly, fiber waste, dust, and the like can be prevented from going near the light emitting element 37. The transmissive part 39 is arranged facing the running space 34. The transmissive part 39 is positioned between the light emitting element 37 and the light receiving element 38 arranged so as to face each other. The transmissive part 39 is a transparent or a semitransparent member, and allows the light emitted from the light emitting element 37 to pass therethrough. In the present embodiment, the transmissive part 39 is provided in the holder 31; however, depending on the shape of the housing 30 and the holder 31, the transmissive part 39 can be attached to the housing 30. Here, transparency is referred to as absorption or scattering of 20 percent (%) or less of the passing light, particularly 10% or less of the passing light, and it is understood that the transmissive part 39 is substantially transparent to the light emitted by the light emitting element 37.

In the present embodiment, the light receiving element 38 is arranged facing the running space 34. Alternatively, a transmissive part that protects the light receiving element 38 can be arranged. That is, the light receiving element 38 can be arranged in a space formed in the holder 31 (space other than the space in which the light emitting element 37 is arranged), and the transmissive part can be arranged so as to close off that space. The transmissive part 39 that protects the light emitting element 37 and the transmissive part that protects the light receiving element 38 are the same on the point that they "cause the light emitted from the light emitting element 37 to pass therethrough".

In the present embodiment, the upstream yarn path guide 32 and the downstream yarn path guide 33 are configured integrally with the housing 30. Alternatively, the upstream yarn path guide 32 can be provided on the upstream side of the holder 31, and the downstream yarn path guide 33 can be provided on the downstream side of the holder 31. By guiding the running yarn via the upstream yarn path guide 32 and the downstream yarn path guide 33, a state of the yarn can be measured accurately by the light emitting element 37 and the light receiving element 38. Note that the state of the yarn can be measured accurately even when only the upstream yarn path guide 32 is provided.

In such a configuration, a part of the light irradiated by the light emitting element 37 is interrupted by the spun yarn 15 and the remaining part is received by the light receiving element 38. The intensity of the light received by the light receiving element 38 varies depending on the thickness of the spun yarn 15. Accordingly, the yarn monitoring device 6 can detect the thickness of the spun yarn 15 based on the intensity of the light received by the light receiving element 38.

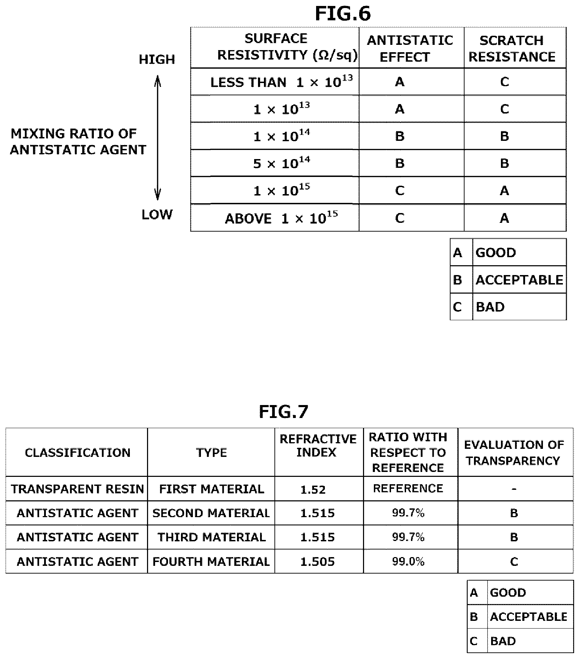

Adhesion of dirt due to the electrostatic charging of the yarn monitoring device 6, and material of the yarn monitoring device 6 that causes elimination of the electrostatic charging will be explained with reference to FIGS. 6 and 7.

In some cases, the spun yarn 15 becomes electrostatically charged because of getting rubbed against a yarn guide and the like while running. When the electrostatically charged spun yarn 15 runs near the transmissive part 39 of the yarn monitoring device 6, the transmissive part 39 may become electrostatically charged. When the transmissive part 39 becomes electrostatically charged, dirt such as surrounding fiber waste and dust adheres on the surface of the transmissive part 39. As a result, the light gets interrupted because of the adhered dirt and the yarn quality cannot be monitored appropriately by the yarn monitoring device 6.

To solve this problem, an antistatic agent is included in the material from which the transmissive part 39 is made. As a result, the transmissive part 39 is less likely to be electrostatically charged, and the electrostatic charge on the transmissive part 39 can be easily discharged even when the transmissive part 39 becomes electrostatically charged. In other words, the transmissive part 39 is made of a material in which the transparent resin and the antistatic agent are mixed. The transparent resin is a base material of the transmissive part 39 that allows light to pass through. The transparent resin can include a semitransparent resin as long as the semitransparent resin allows light to pass through. When a transmissive part that protects the light receiving element 38 is to be provided, an antistatic agent can be included in the material of which this transmissive part is made. In other words, the "transmissive part" according to the present invention includes the transmissive part 39 that protects the light emitting element 37 and a transmissive part that protects the light receiving element 38. Therefore, the "transmissive part" according to the present invention can be arranged at a position at which the transmissive part can protect at least one between the light emitting element 37 and the light receiving element 38.

The antistatic agent is, for example, carbon, a non-ionic antistatic agent, a polymer-type antistatic agent, and the like, and is a material that, when mixed with a transparent resin, reduces surface resistivity. The non-ionic antistatic agent includes a nonionic hydrophilic group / hydrophilic segment, and is a type of an antistatic agent that does not ionize even when dissolved in water. Because of its high solubility in polymers, the non-ionic antistatic agent can be sufficiently mixed with the transparent resin. The polymer-type antistatic agent is a polymer in which a hydrophilic segment is incorporated into a molecule as a conductive unit. The polymer-type antistatic agent has a significantly large molecular weight than that of a surfactant-type antistatic agent having a hydrophobic group and a hydrophilic group in one molecule. Because the polymer-type antistatic agent is less likely to coagulate and solidify over time (difficult to bleed out) compared to the surfactant type antistatic agent, deterioration of transparency can be prevented. It is preferable that the antistatic agent is non-ionic and polymer type, and it is preferable that the hydrophilic segment includes, for example, a polyethylene oxide (PEO) chain. As a type of such an antistatic agent, for example, Perestat (registered trademark) can be used. Furthermore, the antistatic agent can be an ionic antistatic agent that includes an ionic (for example, cationic) hydrophilic group / hydrophilic segment. Alternatively, the antistatic agent can be a small molecule antistatic agent (general surfactant-type antistatic agent).

The surface resistivity is a value measured by using a resistivity meter. Because the surface resistivity is assumed to be high when the use of the transmissive part 39 is considered, a concentric ring method is used to measure the resistivity, instead of a four-terminal method. In the concentric ring method, a concentric ring probe with electrodes having a concentric ring structure consisting of an inner ring and an outer ring is used to create a potential difference between the inner ring and the outer ring. Then, an electric current flowing in that space is measured and a resistance is calculated by adding a correction coefficient in accordance with a shape of the electrode.

From a viewpoint of increasing transparency, it is preferable that the transparent resin and the antistatic agent mix well. Therefore, it is preferable to manufacture a material of the transmissive part 39 by using a method explained below. When producing a resin, generally, two types of pellet-shaped materials are melted, mixed, and cooled down. In the present embodiment, two types of pellet-shaped materials are melted, mixed, and molded into granules again. Subsequently, the granular material is again melted, mixed, and then cooled down to produce the material. Accordingly, because the two materials can be sufficiently mixed, the transparency can be increased. By producing the transmissive part 39 by using such a method, a mixing ratio of the transparent resin and the antistatic agent becomes uniform throughout the transmissive part 39. Alternatively, the transmissive part 39 can be manufactured by using a usual method explained above.

The surface resistivity (Ω/sq or Ω/□) can be reduced by mixing the antistatic agent with the transparent resin. The surface resistivity varies depending on the type or content by percentage of the antistatic agent. FIG. 6 is a table showing a result of an experiment in which an antistatic effect and scratch resistance were evaluated of materials obtained at different contents of the antistatic agent. As shown in FIG. 6, the lower the surface resistivity, the higher the antistatic effect. In other words, the lower the surface resistivity, the less likely it is that electrostatic charging of the transparent resin will occur, and even if the transparent resin becomes electrostatically charged, it is easier to discharge. On the other hand, under a condition in which the surface resistivity is low, the scratch resistance tends to be low. Furthermore, because scratches are formed on the transmissive part 39, transparency of the transmissive part 39 lowers, thereby lowering the accuracy of yarn quality monitoring performed by the yarn monitoring device 6.

Considering only the antistatic effect from the experiment explained in FIG. 6, the surface resistivity of less than 1 × 10¹⁵ ohms per square (Ω/sq) is preferable. As a lower limit of the surface resistivity, the antistatic effect can be confirmed when the surface resistivity is more than or equal to 1 × 10¹⁰ Ω/sq. In other words, by considering only the antistatic effect, it is preferable that the surface resistivity is more than or equal to 1 × 10¹⁰ Ω/sq but less than 1 × 10¹⁵ Ω/sq.

As the content by percentage of the antistatic agent increases, the scratch resistance decreases. Considering that the surface resistivity explained above is realized by using a generic material, it is preferable that a weight ratio of the antistatic agent to the total weight of the mixed material is 20% or less. Furthermore, it is preferable that such a ratio is, for example, more than or equal to 5%.

By considering the antistatic effect and the scratch resistance, according to the invention, the surface resistivity is more than 1 × 10¹³ Ω/sq and less than 1 × 10¹⁵ Ω/sq. Furthermore, it is preferable that the surface resistivity is more than or equal to 1 × 10¹⁴ Ω/sq but less than or equal to 5 × 10¹⁴ Ω/sq.

FIG. 7 is a table showing refractive indexes of the transparent resin (first material), which is the base material of the transmissive part 39, and three types of antistatic agents (second, third, and fourth materials). In the table shown in FIG. 7, as an evaluation of the three types of the antistatic agent, the ratio of the refractive index to the transparent resin and the evaluation of the transparency when mixed with the transparent resin are also explained. Generally, the more materials with a large difference in refractive index are mixed, the more the transparency tends to deteriorate. The evaluation result shown in FIG. 7 is the same, and the evaluation of transparency is within the permissible range for the second material and the third material for which the refractive indexes are close to that of the transparent resin; however, the evaluation of transparency exceeds the permissible range for the fourth material having a larger difference in the refractive index. By considering the above explanation, it is preferable that the difference in the ratio of the refractive index of the antistatic agent to the refractive index of the reference transparent resin is less than 1%. In FIG. 7, the refractive index of the antistatic agent is lower than that of the transparent resin; however, it is clear that the same result can be obtained even when the refractive index is higher than that of the transparent resin. Accordingly, for example, it is preferable that the ratio of the refractive index of the antistatic agent to the transparent resin is more than 99% and less than 101%. In other words, the absolute value of the difference between the refractive index of the transparent resin and that of the antistatic agent is less than 1% when the refractive index of the transparent resin is taken as a reference.

When the transmissive part 39 is electrostatically charged and then discharged, the charge is discharged from the transmissive part 39 to the outside through the holder 31. At this time, if the difference between the surface resistivity of the transmissive part 39 and that of the holder 31 is too large, the charge may not flow from the transmissive part 39 to the holder 31. Therefore, to improve the discharge properties of the transmissive part 39, the antistatic agent is mixed in the material of the holder 31. By keeping the surface resistivity of the holder 31 equal to the surface resistivity of the transmissive part 39, or by keeping the surface resistivity of the holder 31 lower than that of the transmissive part 39, it is easier for the charge to flow from the transmissive part 39 to the holder 31. As a result, the charge of the transmissive part 39 can be easily released to the outside. It is preferable that the antistatic agent mixed in the transmissive part 39 and the antistatic agent mixed in the holder 31 are of the same type so as to bring the surface resistivity of the holder 31 and the transmissive part 39 closer to each other. Such an aspect is not an essential element, and the object of the present invention can be achieved by using the holder 31 whose material does not contain the antistatic agent.

A first modification and a second modification of the embodiment explained above will be explained. In the explanation of these modifications, structural elements having the same or similar configuration as those explained in the embodiment explained above are indicated by the same reference numerals and explanation thereof may be omitted.

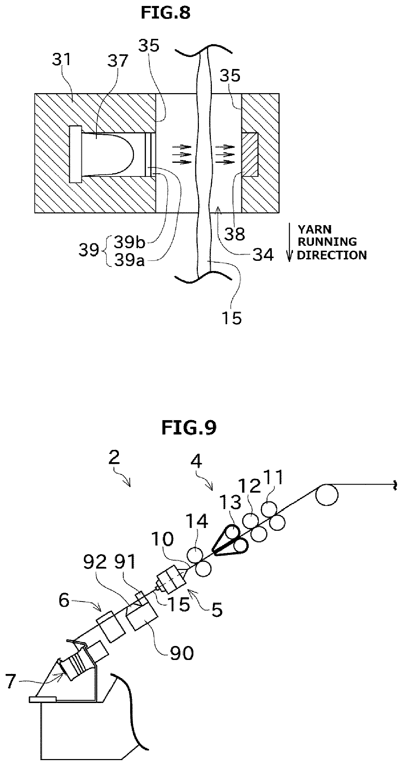

In the embodiments explained above, the transmissive part 39 is made of a material that includes the transparent resin and the antistatic agent in the entire transmissive part 39. On the other hand, in the first modification shown in FIG. 8, the transmissive part 39 includes a first layer 39a and a second layer 39b. The first layer 39a is made of the transparent resin and does not contain the antistatic agent. The second layer 39b is positioned closer to the running space 34 than the first layer 39a, and made of a material that includes the transparent resin and the antistatic agent. The second layer 39b is a thick material, and is different from a coating, which is thin.

Because the cause of the transmissive part 39 becoming electrostatically charged is the spun yarn 15 running in the running space 34, as long as the second layer 39b positioned closer to the running space 34 includes an antistatic effect, adhesion of the dirt to the transmissive part 39 can be prevented. Accordingly, the object of the present invention can be achieved while reducing an amount in which the antistatic agent is used.

The first layer 39a can include a small amount of the antistatic agent. In other words, as long as the content of the antistatic agent by percentage in the first layer 39a is lower than the content of the antistatic agent by percentage in the second layer 39b, the object of the present invention can be achieved while reducing the amount in which the antistatic agent is used. In a configuration of the first modification, the content of the antistatic agent by percentage is different in a thickness direction (traveling direction of the light) of the transmissive part 39. Alternatively, the transmissive part 39 can have a configuration in which two plate materials having varying content of the antistatic agent by percentage are positioned adjacent to each other in the thickness direction.

In the second modification shown in FIG. 9, a base member 90 is arranged upstream of the yarn monitoring device 6 but downstream of the spinning device 5 in a running direction of the fiber bundle 10 or the spun yarn 15. A yarn guide 91 and a discharging member 92 are formed on the base member 90.

The yarn guide 91 guides the spun yarn 15 so that the spun yarn 15 appropriately contacts the discharging member 92. The discharging member 92 is a plate-shaped metal member that has a contact surface that contacts the spun yarn 15. With such a configuration, even when the spun yarn 15 is electrostatically charged, the charge can be discharged to the discharging member 92.

In the second modification, the charge of the spun yarn 15 is discharged by the time the spun yarn 15 reaches the yarn monitoring device 6. Accordingly, because the electrostatic charge on the spun yarn 15 that has reached the yarn monitoring device 6 is reduced, the transmissive part 39 is less likely to be charged. Therefore, an effect of the present invention can be demonstrated more effectively.

As explained above, the yarn monitoring device 6 according to the embodiments includes the light emitting element 37, the light receiving element 38, the holder 31, and the transmissive part 39. The light emitting element 37 and the light receiving element 38 measure the state of the spun yarn 15 running through the running space 34. The light emitting element 37 and the light receiving element 38 are arranged in the holder 31. The transmissive part 39 is arranged facing the running space 34, and allows the light emitted from the light emitting element 37 to pass through. The transmissive part 39 is made of the transparent resin and the antistatic agent.

Because the transmissive part 39 includes the transparent resin and the antistatic agent, the transmissive part 39 is less likely to be electrostatically charged due to the presence of the antistatic agent while allowing light to pass through the transparent resin. Even when the transmissive part 39 becomes electrostatically charged, the charge on the transmissive part 39 can be released to the outside. Because dirt is less likely to adhere to such a non-charged transmissive part 39, the yarn quality can be monitored with high accuracy.

In the yarn monitoring device 6 according to the embodiments explained above, the surface resistivity of the transmissive part 39 is more than or equal to 1 × 10¹³ Ω/sq but less
than 1 × 10¹⁵Ω/sq

With the above configuration, the scratch resistance of the transmissive part 39 can be prevented from becoming too low while making the transmissive part 39 less likely to be electrostatically charged.

In the yarn monitoring device 6 according to the embodiments explained above, the weight of the antistatic agent included in the transmissive part 39 with respect to the weight of the transmissive part 39 is 20% or less.

With the above configuration, the scratch resistance of the transmissive part 39 can be prevented from having too low scratch resistance, while making the transmissive part 39 less likely to become electrostatically charged.

In the yarn monitoring device 6 according to the embodiments explained above, the surface resistivity of the transmissive part 39 is more than or equal to 1 × 10¹⁴ Ω/sq but less than or equal to 5 × 10¹⁴Ω/sq

With the above configuration, it is possible to further appropriately balance the resistance to charging of the transmissive part 39 and the scratch resistance of the transmissive part 39.

In the yarn monitoring device 6 according to the embodiments explained above, the holder 31 is made of a resin in which the antistatic agent is mixed. Furthermore, the surface resistivity of the holder 31 is less than or equal to the surface resistivity of the transmissive part 39.

Even when the transmissive part 39 becomes electrostatically charged, the charge of the transmissive part 39 can be easily moved to the holder 31 such that the electrostatic charge can be easily discharged to the outside.

In the yarn monitoring device 6 according to the embodiments explained above, the antistatic agent is a polymer antistatic agent.

With the above configuration, bleed-out from a resin composition of the transmissive part 39 is less likely to occur.

In the yarn monitoring device 6 according to the embodiments explained above, the antistatic agent is a non-ionic antistatic agent.

With the above configuration, the transparent resin and the antistatic agent can be sufficiently mixed.

In the yarn monitoring device 6 according to the embodiments explained above, difference between the refractive index of the transparent resin and the refractive index of the antistatic agent is less than 1% when the refractive index of the transparent resin is taken as a reference.

With the above configuration, because the refractive indexes of the transparent resin and the antistatic agent are close to each other, transparency of the transmissive part 39 can be increased.

In the yarn monitoring device 6 according to the embodiments explained above, a mixture obtained by mixing the transparent resin and the antistatic agent has a uniform mixing ratio throughout the entire transmissive part 39.

With the above configuration, compared to the transmissive part 39 with a multi-layer structure, a process for manufacturing the transmissive part 39 can be simplified.

In the yarn monitoring device 6 according to the first modification, the transmissive part 39 includes the first layer 39a and the second layer 39b. The first layer 39a includes at least the transparent resin. The second layer 39b is positioned closer to the running space 34 than the first layer 39a, and includes at least the transparent resin and the antistatic agent. The second layer 39b includes higher content of the antistatic agent by percentage than that of the first layer 39a.

With the above configuration, the antistatic effect can be realized while reducing the amount in which the antistatic agent is used.

The spinning machine 1 according to the second modification includes the yarn monitoring device 6; the drafting device 4; the spinning device 5; the winding section 8; and the discharging member 92. The drafting device 4 drafts the fiber bundle 10. The spinning device 5 twists the fiber bundle 10 to produce the spun yarn 15. The winding section 8 winds the spun yarn 15 produced by the spinning device 5. The discharging member 92 discharges an electrostatic charge on the spun yarn 15 by contacting the spun yarn 15. The drafting device 4, the spinning device 5, the discharging member 92, the yarn monitoring device 6, and the winding section 8 are arranged sequentially from upstream in a running direction of the fiber bundle 10 or the spun yarn 15.

With the above configuration, deterioration of the monitoring accuracy of the yarn monitoring device 6 due to the electrostatic charging of the transmissive part 39 can be prevented more reliably.

Exemplary embodiments and modifications of the present invention are explained above. The configurations explained above, however, can be modified as explained below.

In the embodiments explained above, the light receiving element 38 detects the light that passed through the spun yarn 15; however, the light receiving element 38 can be configured to detect the light reflected from the spun yarn 15.

In the embodiments explained above, the yarn monitoring device 6 is constituted by a pair of the light emitting element 37 and the light receiving element 38. Alternatively, the yarn monitoring device 6 can include multiple pairs of the light emitting element 37 and the light receiving element 38. In such a configuration, a plurality of the transmissive parts are arranged; however, in such a case, the surface resistivity and the refractive index can be the same in all the transmissive parts. In addition to a photoelectronic sensor as explained in the present embodiment, the yarn monitoring device 6 can include a capacitance-type sensor. In such a configuration, the antistatic agent can be mixed only in the transmissive part of the photoelectronic sensor among the two types of the sensors.

In the embodiments explained above, the layout is such that the winding section 8 is arranged below the drafting device 4 in the vertical direction, and the winding section 8 is closer to the downstream of the yarn path of the spun yarn 15 as the yarn path run towards the lower side in the vertical direction. Alternatively, a winding device can be arranged above the drafting device in the vertical direction. Moreover, the layout can be such that the winding device is arranged closer to the downstream of the yarn path of the spun yarn 15 as the yarn path run towards the upper side in the vertical direction.

In the embodiments explained above, the light emitting element 37 and the light receiving element 38 are arranged so as to face each other. Alternatively, for example, by changing the direction of the optical path by using a reflector and the like, the layout can be such that the light emitting element 37 and the light receiving element 38 do not face each other.

In the embodiments explained above, the spun yarn 15 is pulled out from the spinning device 5 by the yarn accumulating roller 23. Alternatively, instead of the yarn accumulating device 7, a delivery roller pair can be provided on the downstream side of the spinning device 5, and the spun yarn 15 can be pulled out from the spinning device 5 by the delivery roller pair. In such a configuration, any of the yarn accumulating roller, a slack tube, and a mechanical compensator can be provided on the downstream side of the delivery roller pair.

In the embodiments explained above, the yarn joining device 27 and the like is provided on the yarn joining carrier 3; however, the yarn joining device 27 and the like can be provided in each spinning unit 2.

In the embodiments explained above, the yarn monitoring device 6 is arranged downstream of the spinning device 5 but upstream of the yarn accumulating device 7. Alternatively or additionally, the yarn monitoring device can be arranged downstream of the yarn joining device 27. Accordingly, the position and the number of the yarn monitoring devices installed are given as an example and can be changed. Moreover, the present invention can be applied to any installed yarn monitoring device.

In the embodiments explained above, an embodiment in which the present invention is applied to a spinning machine is cited as an example. Alternatively, the present invention can be applied to other yarn winding machines (for example, an automatic winder or an open-end spinning machine) in which a yarn monitoring device is provided.

In the embodiments explained above, an embodiment in which a yarn end is sucked and caught from the package 18 supported by the winding section 8 by the suction mouth 29 and is guided to the yarn joining device 27 is cited as an example. Alternatively or additionally, a fixed type catching device can be arranged at a fixed position of each spinning unit 2 to suck and catch the yarn end wound onto the package 18.

An object of the present invention is as mentioned above, and the means to achieve the object and the advantageous effect thereof will be explained below.

According to one aspect of the present invention, a yarn monitoring device includes a light emitting element; a light receiving element; a holder; and a transmissive part. The light emitting element emits light in a running space through which a yarn runs and the light receiving element receives the light emitted by the light emitting element. The holder holds the light emitting element and the light receiving element. The transmissive part is arranged facing the running space at a position at which the transmissive part can protect at least one between the light emitting element and the light receiving element and allows the light from the light emitting element to pass through. The transmissive part is constituted by a transparent resin and an antistatic agent.

With such a configuration, because the transmissive part includes the transparent resin and the antistatic agent, the transmissive part is less likely to be electrostatically charged due to the presence of the antistatic agent while allowing light to pass through the transparent resin. Even when the transmissive part becomes electrostatically charged, the charge on the transmissive part can be released to the outside. Because dirt is less likely to adhere to such a non-charged transmissive part, the yarn quality can be monitored with high accuracy.

In the above yarn monitoring device, it is preferable that the yarn monitoring device includes an upstream yarn path guide that is arranged on an upstream side of the light receiving element in a running direction of the yarn to guide the yarn.

With such a configuration, because the yarn guided by the upstream yarn path guide can be detected, the state of the yarn can be accurately detected.

In the above yarn monitoring device, a surface resistivity of the transmissive part is more than or equal to 1 × 10¹³ Ω/sq but less than 1 × 10¹⁵ Ω/sq.

With the above configuration, the scratch resistance of the transmissive part can be prevented from becoming too low while making the transmissive part less likely to be electrostatically charged.

In the above yarn monitoring device, it is preferable that the weight of the antistatic agent included in the transmissive part with respect to the weight of the transmissive part is 20% or less.

With the above configuration, the scratch resistance of the transmissive part can be prevented from having too low scratch resistance, while making the transmissive part less likely to become electrostatically charged.

In the above yarn monitoring device, it is preferable that the surface resistivity of the transmissive part is more than or equal to 1 × 10¹⁴ Q/sq but less than or equal to 5 × 10¹⁴ Q/sq.

With the above configuration, it is possible to further appropriately balance the resistance to charging of the transmissive part and the scratch resistance of the transmissive part.

In the above yarn monitoring device, it is preferable that the holder is formed of a material that includes the antistatic agent, and the surface resistivity of the holder is less than or equal to the surface resistivity of the transmissive part.

With the above configuration, even when the transmissive part becomes electrostatically charged, the charge of the transmissive part can be easily moved to the holder such that the electrostatic charge can be easily discharged to the outside.

In the above yarn monitoring device, it is preferable that the antistatic agent is a polymer antistatic agent.

With the above configuration, bleed-out from a resin composition of the transmissive part is less likely to occur.

In the above yarn monitoring device, it is preferable that the antistatic agent is a non-ionic antistatic agent.

With the above configuration, the transparent resin and the antistatic agent can be sufficiently mixed.

In the above yarn monitoring device, it is preferable that difference between a refractive index of the transparent resin and a refractive index of the antistatic agent is less than 1% when the refractive index of the transparent resin is taken as a reference.

With the above configuration, because the refractive indexes of the transparent resin and the antistatic agent are close to each other, transparency of the transmissive part can be increased.

In the above yarn monitoring device, it is preferable that a mixture obtained by mixing the transparent resin and the antistatic agent has a uniform mixing ratio throughout the entire transmissive part.

With the above configuration, compared to the transmissive part with a multi-layer structure, a process for manufacturing the transmissive part can be simplified.

In the above yarn monitoring device, it is preferable to have the following configuration. The transmissive part includes a first layer and a second layer. The first layer includes at least the transparent resin. The second layer is positioned closer to the running space than the first layer, and includes at least the transparent resin and the antistatic agent. The second layer includes higher content of the antistatic agent by percentage than that of the first layer.

With the above configuration, the antistatic effect can be realized while reducing the amount in which the antistatic agent is used.

According to another aspect of the present invention, a yarn winding machine includes the yarn monitoring device; a drafting device; a spinning device; a winding section; and a discharging member. The drafting device drafts a fiber bundle. The spinning device twists the fiber bundle to produce a yarn. The winding section winds the yarn produced by the spinning device. The discharging member discharges an electrostatic charge on the yarn by contacting the yarn. The drafting device, the spinning device, the discharging member, the yarn monitoring device, and the winding section are arranged sequentially from upstream in a running direction of the fiber bundle or the yarn.

With the above configuration, deterioration of the monitoring accuracy of the yarn monitoring device due to the electrostatic charging of the transmissive part can be prevented more reliably.

In the above explanation, the meaning of "a plurality of" also includes "a predetermined number of".

Although the invention has been explained with respect to specific embodiments for a complete and clear disclosure, the appended claims are not to be thus limited but are to be construed as embodying all modifications and alternative constructions that fall within the scope of the claims.

## Claims

1. A yarn monitoring device (6) comprising:
a light emitting element (37) that emits light in a running space (34) through which a yarn (15) runs;
a light receiving element (38) that receives the light emitted by the light emitting element (37);
a holder (31) that holds the light emitting element (37) and the light receiving element (38); and
a transmissive part (39) that is arranged facing the running space (34) at a position at which the transmissive part (39) can protect at least one between the light emitting element (37) and the light receiving element (38) and allows the light from the light emitting element (37) to pass through, wherein
the transmissive part (39) is constituted by a transparent resin and an antistatic agent,
**characterized in that** a surface resistivity of the transmissive part (39) is more than 1 × 10¹³ Q/sq and less than 1 × 10¹⁵ Q/sq.

2. The yarn monitoring device (6) as claimed in Claim 1 includes an upstream yarn path guide (32) that is arranged on an upstream side of the light receiving element (38) in a running direction of the yarn (15) to guide the yarn (15).

3. The yarn monitoring device (6) as claimed in Claims 1 to 2, wherein the weight of the antistatic agent included in the transmissive part (39) with respect to the weight of the transmissive part (39) is 20 percent (%) or less.

4. The yarn monitoring device (6) as claimed in Claim 1, 2 or 3, wherein the surface resistivity of the transmissive part (39) is more than or equal to 1 × 10¹⁴ Q/sq but less than or equal to 5 × 10¹⁴ Q/sq.

5. The yarn monitoring device (6) as claimed in one of Claims 1 to 4, wherein
the holder (31) is formed of a material that includes the antistatic agent, and
the surface resistivity of the holder (31) is less than or equal to the surface resistivity of the transmissive part (39).

6. The yarn monitoring device (6) as claimed in one of Claims 1 to 5, wherein the antistatic agent is a polymer antistatic agent.

7. The yarn monitoring device (6) as claimed in one of Claims 1 to 6, wherein the antistatic agent is a non-ionic antistatic agent.

8. The yarn monitoring device (6) as claimed in one of Claims 1 to 7, wherein difference between a refractive index of the transparent resin and a refractive index of the antistatic agent is less than 1% when the refractive index of the transparent resin is taken as a reference.

9. The yarn monitoring device (6) as claimed in one of Claims 1 to 8, wherein a mixture obtained by mixing the transparent resin and the antistatic agent has a uniform mixing ratio throughout the entire transmissive part (39).

10. The yarn monitoring device (6) as claimed in one of Claims 1 to 8, wherein
the transmissive part (39) includes
a first layer (39a) that includes at least the transparent resin, and
a second layer (39b) that is positioned closer to the running space (34) than the first layer (39a), and includes at least the transparent resin and the antistatic agent, wherein
the second layer (39b) includes higher content of the antistatic agent by percentage than that of the first layer (39a).

11. A yarn winding machine (1) comprising:
the yarn monitoring device (6) as claimed in one of Claims 1 to 10;
a drafting device (4) that drafts a fiber bundle (10);
a spinning device (5) that twists the fiber bundle (10) to produce a yarn (15);
a winding section (8) that winds the yarn (15) produced by the spinning device (5); and
a discharging member (92) that discharges an electrostatic charge on the yarn (15) by contacting the yarn (15), wherein
the drafting device (4), the spinning device (5), the discharging member (92), the yarn monitoring device (6), and the winding section (8) are arranged sequentially from upstream in a running direction of the fiber bundle (10) or the yarn (15).

## Patentansprüche

1. Garnüberwachungsvorrichtung (6), umfassend:
ein lichtemittierendes Element (37), das Licht in einen Laufraum (34) emittiert, durch den ein Garn (15) läuft;
ein lichtempfangendes Element (38), das das von dem lichtemittierenden Element (37) emittierte Licht empfängt;
einen Halter (31), der das lichtemittierende Element (37) und das lichtempfangende Element (38) hält; und
ein durchlässiges Teil (39), das dem Laufraum (34) zugewandt an einer Position angeordnet ist, an der das durchlässige Teil (39) mindestens eines von dem lichtemittierenden Element (37) und dem lichtempfangenden Element (38) schützen kann und das Licht von dem lichtemittierenden Element (37) durchlässt, wobei
das durchlässige Teil (39) aus einem transparenten Harz und einem antistatischen Mittel besteht,
**dadurch gekennzeichnet, dass**
ein Oberflächenwiderstand des durchlässigen Teils (39) mehr als 1 × 10¹³ Ω/sq und weniger als 1 × 10¹⁵ Ω/sq beträgt.

2. Garnüberwachungsvorrichtung (6) nach Anspruch 1, einschließlich einer stromaufwärtigen Garnwegführung (32), die auf einer stromaufwärtigen Seite des lichtempfangenden Elements (38) in einer Laufrichtung des Garns (15) angeordnet ist, um das Garn (15) zu führen.

3. Garnüberwachungsvorrichtung (6) nach einem der Ansprüche 1 bis 2, wobei das Gewicht des in dem durchlässigen Teil (39) enthaltenen antistatischen Mittels in Bezug auf das Gewicht des durchlässigen Teils (39) 20 Prozent (%) oder weniger beträgt.

4. Garnüberwachungsvorrichtung (6) nach Anspruch 1, 2 oder 3, wobei der Oberflächenwiderstand des durchlässigen Teils (39) mehr als oder gleich 1 × 10¹⁴ Ω/sq, jedoch weniger als oder gleich 5 × 10¹⁴ Ω/sq beträgt.

5. Garnüberwachungsvorrichtung (6) nach einem der Ansprüche 1 bis 4, wobei
der Halter (31) aus einem Material gebildet ist, das das antistatische Mittel einschließt, und
der Oberflächenwiderstand des Halters (31) kleiner als oder gleich dem Oberflächenwiderstand des durchlässigen Teils (39) ist.

6. Garnüberwachungsvorrichtung (6) nach einem der Ansprüche 1 bis 5, wobei das antistatische Mittel ein polymeres antistatisches Mittel ist.

7. Garnüberwachungsvorrichtung (6) nach einem der Ansprüche 1 bis 6, wobei das antistatische Mittel ein nicht-ionisches antistatisches Mittel ist.

8. Garnüberwachungsvorrichtung (6) nach einem der Ansprüche 1 bis 7, wobei der Unterschied zwischen einem Brechungsindex des transparenten Harzes und einem Brechungsindex des antistatischen Mittels weniger als 1 % beträgt, wenn der Brechungsindex des transparenten Harzes als Referenz genommen wird.

9. Garnüberwachungsvorrichtung (6) nach einem der Ansprüche 1 bis 8, wobei eine durch Mischen des transparenten Harzes und des antistatischen Mittels erhaltene Mischung ein gleichmäßiges Mischungsverhältnis über den gesamten durchlässigen Teil (39) aufweist.

10. Garnüberwachungsvorrichtung (6) nach einem der Ansprüche 1 bis 8, wobei das durchlässige Teil (39) Folgendes einschließt:
eine erste Schicht (39a), die zumindest das transparente Harz einschließt, und
eine zweite Schicht (39b), die näher am Laufraum (34) angeordnet ist als die erste Schicht (39a) und mindestens das transparente Harz und das antistatische Mittel einschließt, wobei
die zweite Schicht (39b) einen prozentual höheren Gehalt an antistatischem Mittel einschließt als die erste Schicht (39a).

11. Garnspulmaschine (1), umfassend:
die Garnüberwachungsvorrichtung (6) nach einem der Ansprüche 1 bis 10;
eine Verstreckvorrichtung (4), die ein Faserbündel (10) verstreckt;
eine Spinnvorrichtung (5), die das Faserbündel (10) verzwirnt, um ein Garn (15) zu erzeugen;
einen Spulbereich (8), der das von der Spinnvorrichtung (5) erzeugte Garn (15) aufspult; und
ein Entladungselement (92), das eine elektrostatische Ladung auf dem Garn (15) durch Kontaktieren des Garns (15) entlädt, wobei
die Verstreckvorrichtung (4), die Spinnvorrichtung (5), das Entladungselement (92), die Garnüberwachungsvorrichtung (6) und der Spulbereich (8) aufeinanderfolgende von stromaufwärts in einer Laufrichtung des Faserbündels (10) oder des Garns (15) angeordnet sind.

## Revendications

1. Dispositif (6) de surveillance de fil comprenant :
un élément (37) d'émission de lumière qui émet de la lumière dans un espace de déplacement (34) à travers lequel se déplace un fil (15) ;
un élément (38) de réception de lumière qui reçoit la lumière émise par l'élément (37) d'émission de lumière ;
un moyen de retenue (31) qui retient l'élément (37) d'émission de lumière et l'élément (38) de réception de lumière ; et
une pièce transmissive (39) qui est agencée en face de l'espace de déplacement (34) dans une position dans laquelle la pièce transmissive (39) est apte à protéger au moins un parmi l'élément (37) d'émission de lumière et l'élément (38) de réception de lumière et permet à la lumière provenant de l'élément (37) d'émission de lumière de traverser, dans lequel
la pièce transmissive (39) est constituée d'une résine transparente et d'un agent antistatique,
**caractérisé en ce que**
une résistivité de surface de la pièce transmissive (39) est supérieure à 1 × 10¹³Ω/sq et inférieure à 1 × 10¹⁵Ω/sq.

2. Dispositif (6) de surveillance de fil selon la revendication 1, incluant un guidage de passage de fil en amont (32) qui est agencé sur un côté amont de l'élément (38) de réception de lumière dans une direction de déplacement du fil (15) pour guider le fil (15).

3. Dispositif (6) de surveillance de fil selon les revendications 1 à 2, dans lequel le poids de l'agent antistatique inclus dans la pièce transmissive (39) par rapport au poids de la pièce transmissive (39) est de 20 pour cent (%) ou moins.

4. Dispositif (6) de surveillance de fil selon la revendication 1, la revendication 2 ou la revendication 3, dans lequel la résistivité superficielle de la pièce transmissive (39) est supérieure ou égale à 1 × 10¹⁴ Ω/sq mais inférieure ou égale à 5 × 10¹⁴ Ω/sq.

5. Dispositif (6) de surveillance de fil selon l'une des revendications 1 à 4, dans lequel
le moyen de retenue (31) est formé d'un matériau qui inclut l'agent antistatique, et
la résistivité superficielle du moyen de retenue (31) est inférieure ou égale à la résistivité superficielle de la pièce transmissive (39).

6. Dispositif (6) de surveillance de fil selon l'une des revendications 1 à 5, dans lequel l'agent antistatique est un agent antistatique polymère.

7. Dispositif (6) de surveillance de fil selon l'une des revendications 1 à 6,dans lequel l'agent antistatique est un agent antistatique non-ionique.

8. Dispositif (6) de surveillance de fil selon l'une des revendications 1 à 7,dans lequel la différence entre un indice de réfraction de la résine transparente et un indice de réfraction de l'agent antistatique est inférieure à 1 % lorsque l'indice de réfraction de la résine transparente est pris comme référence.

9. Dispositif (6) de surveillance de fil selon l'une des revendications 1 à 8, dans lequel un mélange obtenu en mélangeant la résine transparente et l'agent antistatique présente un rapport de mélange uniforme dans toute la pièce transmissive (39).

10. Dispositif (6) de surveillance de fil selon l'une des revendications 1 à 8,dans lequel
la pièce transmissive (39) inclut
une première couche (39a) qui inclut au moins la résine transparente, et
une seconde couche (39b) qui est positionnée de manière plus proche de l'espace de déplacement (34) que la première couche (39a), et inclut au moins la résine transparente et l'agent antistatique, dans lequel
la seconde couche (39b) inclut une teneur plus élevée en agent antistatique en pourcentage que celle de la première couche (39a).

11. Machine de bobinage de fil (1) comprenant :
le dispositif (6) de surveillance de fil selon l'une des revendications 1 à 10 ;
un dispositif d'étirage (4) qui étire un faisceau de fibres (10) ;
un dispositif de filature (5) qui vrille le faisceau de fibres (10) de façon à produire un fil (15) ;
une section de bobinage (8) qui bobine le fil (15) produit par le dispositif de filature (5) ; et
un élément de décharge (92) qui décharge une charge électrostatique sur le fil (15) en venant au contact du fil (15), dans lequel
le moyen d'étirage (4), le moyen de filature (5), l'élément de décharge (92), le dispositif (6) de surveillance de fil et la section de bobinage (8) sont agencés de manière séquentielle depuis l'amont dans la direction de passage du faisceau de fibres (10) ou du fil (15).
